# EUROPÄISCHE PATENTSCHRIFT

(11) **EP 3 756 231 B1**
(45) Veröffentlichungstag und Bekanntmachung des Hinweises auf die Patenterteilung: **25.06.2025**
(21) Anmeldenummer: 19705305.1
(22) Anmeldetag: 08.02.2019
(51) Int. Cl.: H01M 8/2483, H01M 8/0206, H01M 8/0258, H01M 8/0228, H01M 8/0267, C25B 9/00, H01M 8/0273

(54) **MEDIENZUFUHRSTRUKTUR FÜR ELEKTROCHEMISCHE VORRICHTUNG**
MANIFOLD STRUCTURE FOR ELECTROCHEMICAL DEVICE
STRUCTURE DE DISTRIBUTION DE FLUIDE POUR DISPOSITIF ÉLECTROCHIMIQUE

(30) Priorität: 23.02.2018 DE 102018104172
(43) Veröffentlichungstag der Anmeldung: 30.12.2020
(60) Teilanmeldung: 25176178.9
(73) Patentinhaber: EKPO Fuel Cell Technologies GmbH, 72581 Dettingen (DE)
(72) Erfinder: KRAFT, Jürgen, 72555 Metzingen (DE); MORCOS, Manuel, 72076 Tübingen (DE)
(74) Vertreter: Hoeger, Stellrecht & Partner Patentanwälte mbB
(86) Internationale Anmeldenummer: PCT/EP2019/053112
(87) Internationale Veröffentlichungsnummer: WO 2019/162106

(56) Entgegenhaltungen:
- DE-A1- 102014 104 017
- DE-U1- 202015 104 972
- US-A1- 2016 118 673

## Beschreibung

Die vorliegende Erfindung betrifft eine elektrochemische Vorrichtung, welche Folgendes umfasst:
einen Stapel aus mehreren, längs einer Stapelrichtung aufeinanderfolgenden elektrochemischen Einheiten, die jeweils eine elektrochemisch aktive Membran-Elektroden-Anordnung, eine Bipolarplatte und eine Dichtungsanordnung umfassen,
mindestens einen Mediumkanal, der sich längs der Stapelrichtung durch mehrere der elektrochemischen Einheiten hindurch erstreckt,
mindestens ein Strömungsfeld, durch welches ein Medium aus dem Mediumkanal quer zu der Stapelrichtung von dem Mediumkanal zu einem anderen Mediumkanal strömen kann, und
mindestens einen Verbindungskanal, durch welchen das Strömungsfeld und der Mediumkanal in Fluidverbindung miteinander stehen,
wobei der Verbindungskanal eine mediumkanalseitige Mündungsöffnung, die sich längs einer Umfangsrichtung des Strömungsfelds von einem ersten mediumkanalseitigen Rand bis zu einem zweiten mediumkanalseitigen Rand erstreckt, und
eine strömungsfeldseitige Mündungsöffnung, die sich längs der Umfangsrichtung des Strömungsfelds von einem ersten strömungsfeldseitigen Rand bis zu einem zweiten strömungsfeldseitigen Rand erstreckt, aufweist.

Die DE 10 2014 104 017 A1 offenbart eine elektrochemische Vorrichtung gemäß dem Oberbegriff von Anspruch 1.

Die US 2016/118673 A1 offenbart eine elektrochemische Vorrichtung mit Medienkanälen und Strömungsfeldern, die über nicht näher spezifizierte Verbindungskanäle in Fluidverbindung stehen, wobei strömungsfeldseitige Randabschnitte und mediumkanalseitige Randabschnitte zum Teil versetzt angeordnet sind und eine strömungsfeldseitige Mündungsöffnung eine größere Fluiddurchtrittsfläche aufweist als eine mediumkanalseitige Mündungsöffnung.

Die DE 20 2015 104 972 U1 offenbart eine elektrochemische Vorrichtung, bei der Ränder von strömungsfeldseitigen Mündungsöffnungen und von mediumkanalseitigen Mündungsöffnungen von Verbindungskanälen zueinander versetzt angeordnet sind, wobei die strömungsfeldseitige Mündungsöffnung eine größere Fluiddurchtrittsfläche aufweist als die mediumkanalseitige Mündungsöffnung.

Der vorliegenden Erfindung liegt die Aufgabe zugrunde, eine elektrochemische Vorrichtung der vorstehend genannten Art zu schaffen, bei welcher ein großer Volumenstrom des fluiden Mediums durch den Verbindungskanal hindurch erzielbar ist.

Diese Aufgabe wird durch eine elektrochemische Vorrichtung nach Anspruch 1 gelöst.

Hierdurch steht über die Durchströmungsrichtung des Verbindungskanals hinweg überall ein ausreichend großer durchströmbarer Querschnitt für die Strömungszuführung von fluidem Medium zu dem Strömungsfeld des betreffenden fluiden Mediums oder aus dem Strömungsfeld des betreffenden fluiden Mediums zur Verfügung.

Insbesondere kann der dem Strömungsfeld beziehungsweise dem chemisch aktiven Teil der Membran-Elektroden-Anordnung zugewandte Bereich des Verbindungskanals verbreitert werden, wodurch der Druckverlust in dem Verbindungskanal reduziert wird.

Durch die Vergrößerung der strömungsfeldseitigen Mündungsöffnung des Verbindungskanals können aus dem Verbindungskanal heraus mehr sogenannte Gasports (Durchtrittsöffnungen für den Durchtritt des fluiden Mediums durch eine Lage der Bipolarplatte hindurch) angeströmt werden, und/oder der von dem fluiden Medium durchströmbare Querschnitt des Gasportbereichs kann vergrößert werden.

Durch den Versatz eines strömungsfeldseitigen Randes der strömungsfeldseitigen Mündungsöffnung relativ zu einem mediumkanalseitigen Rand der mediumkanalseitigen Mündungsöffnung des Verbindungskanals kann ein Versatz zwischen einem strömungsfeldseitigen Abschnitt des Verbindungskanals und einem mediumkanalseitigen Abschnitt des Verbindungskanals realisiert werden, was mehr Freiheitsgrade im Design des Verbindungskanals gestattet.

Der Anströmungsbereich aus dem Verbindungskanal zu den Gasports kann verbreitert werden. Es besteht lediglich die Anforderung, dass die Verbindungskanäle zwischen getrennten Medienversorgungsstrukturen auf das Basisniveau (beispielsweise den Blockbereich der Bipolarplatte) herabgeführt werden, um in diesem Zwischenbereich zwischen zwei Verbindungskanälen eine fluiddichte Abdichtung, beispielsweise durch eine Schweißnaht, einbringen und so die in den beiden Verbindungskanälen geführten fluiden Medien voneinander abtrennen zu können.

Das im Mediumkanal, dem Verbindungskanal und dem Strömungsfeld geführte fluide Medium kann insbesondere ein Brenngas, ein Oxidationsmittel oder ein Kühlmittel sein.

Bei der Erfindung ist vorgesehen, dass die strömungsfeldseitige Mündungsöffnung des Verbindungskanals eine größere Fluiddurchtrittsfläche aufweist als die mediumkanalseitige Mündungsöffnung des Verbindungskanals.

Bei einer besonderen Ausgestaltung der Erfindung mündet die strömungsfeldseitige Mündungsöffnung des Verbindungskanals an einem Eckbereich des Strömungsfelds. Insbesondere bei der Anordnung des Verbindungskanals an einem Eckbereich der aktiven Fläche der Membran-Elektroden-Anordnung einer elektrochemischen Einheit ist die vorliegende Erfindung besonders vorteilhaft, weil ohne einen Versatz zwischen mindestens einem strömungsfeldseitigen Rand der strömungsfeldseitigen Mündungsöffnung des Verbindungskanals und mindestens einem mediumkanalseitigen Rand der mediumkanalseitigen Mündungsöffnung des Verbindungskanals die strömungsfeldseitige Mündungsöffnung eine deutlich kleinere Fluiddurchtrittsfläche aufweisen würde als die mediumkanalseitige Mündungsöffnung des Verbindungskanals.

Der Verbindungskanal kann zweiseitig (auf der Strömungsfeldseite und auf der Mediumkanalseite) oder auch nur einseitig (auf der Mediumkanalseite oder, vorzugsweise, auf der Strömungsfeldseite) verbreitert sein oder auch nur einen Versatz zwischen der strömungsfeldseitigen Mündungsöffnung und der mediumkanalseitigen Mündungsöffnung längs der Umfangsrichtung des Strömungsfelds aufweisen.

Der erste strömungsfeldseitige Rand der strömungsfeldseitigen Mündungsöffnung des Verbindungskanals weist vorzugsweise von dem ersten mediumkanalseitigen Rand der mediumkanalseitigen Mündungsöffnung des Verbindungskanals einen kleineren Abstand auf als von dem zweiten mediumkanalseitigen Rand der mediumkanalseitigen Mündungsöffnung.

Der zweite strömungsfeldseitige Rand der strömungsfeldseitigen Mündungsöffnung des Verbindungskanals weist vorzugsweise von dem zweiten mediumkanalseitigen Rand der mediumkanalseitigen Mündungsöffnung des Verbindungskanals einen kleineren Abstand auf als von dem ersten mediumkanalseitigen Rand der mediumkanalseitigen Mündungsöffnung.

Der erste mediumkanalseitige Rand der mediumkanalseitigen Mündungsöffnung ist mit dem ersten strömungsfeldseitigen Rand der strömungsfeldseitigen Mündungsöffnung durch eine erste Randlinie verbunden, welche eine erste seitliche Begrenzung des Verbindungskanals bildet, und der zweite mediumkanalseitige Rand der mediumkanalseitigen Mündungsöffnung ist mit dem zweiten strömungsfeldseitigen Rand der strömungsfeldseitigen Mündungsöffnung durch eine zweite Randlinie verbunden, welche eine zweite seitliche Begrenzung des Verbindungskanals bildet.

Bei einer besonderen Ausgestaltung der Erfindung ist vorgesehen, dass die erste Randlinie und/oder die zweite Randlinie gestuft ausgebildet ist.

Hierdurch entsteht vorzugsweise eine sprunghafte Veränderung im durchströmbaren Querschnitt des Verbindungskanals (Fluidkanals) längs der Durchströmungsrichtung.

Insbesondere kann vorgesehen sein, dass der Verbindungskanal eine zweigeteilte Struktur aufweist und einen mediumkanalseitigen Abschnitt sowie einen strömungsfeldseitigen Abschnitt umfasst, wobei am Übergang vom mediumkanalseitigen Abschnitt zum strömungsfeldseitigen Abschnitt des Verbindungskanals eine sprunghafte Veränderung des durchströmbaren Querschnitts des Verbindungskanals auftritt.

Die erste Randlinie umfasst einen sich von dem ersten mediumkanalseitigen Rand der mediumkanalseitigen Mündungsöffnung im Wesentlichen senkrecht zu der Umfangsrichtung des Strömungsfelds (und im Wesentlichen senkrecht zu der Stapelrichtung) weg erstreckenden ersten mediumkanalseitigen Randlinienabschnitt und einen sich von dem ersten strömungsfeldseitigen Rand der strömungsfeldseitigen Mündungsöffnung im Wesentlichen senkrecht zu der Umfangsrichtung des Strömungsfelds (und senkrecht zu der Stapelrichtung) weg erstreckenden ersten strömungsfeldseitigen Randlinienabschnitt
und/oder
die zweite Randlinie umfasst einen sich von dem zweiten mediumkanalseitigen Rand der mediumkanalseitigen Mündungsöffnung im Wesentlichen senkrecht zu der Umfangsrichtung des Strömungsfelds (und senkrecht zu der Stapelrichtung) weg erstreckenden zweiten mediumkanalseitigen Randlinienabschnitt und einen sich von dem zweiten strömungsfeldseitigen Rand der strömungsfeldseitigen Mündungsöffnung im Wesentlichen senkrecht zu der Umfangsrichtung des Strömungsfelds (und senkrecht zu der Stapelrichtung) weg erstreckenden zweiten strömungsfeldseitigen Randlinienabschnitt.

Alternativ oder ergänzend zu einer gestuften Ausbildung der ersten Randlinie und/oder der zweiten Randlinie kann auch vorgesehen sein, dass die erste Randlinie und/oder die zweite Randlinie schräg zur Umfangsrichtung des jeweils zugeordneten Strömungsfelds verläuft, so dass der durchströmbare Querschnitt des Verbindungskanals sich kontinuierlich verändert, insbesondere zur strömungsfeldseitigen Mündungsöffnung des Verbindungskanals hin vergrößert.

Abstützelemente oder Stützstellen im Verbindungskanal sind nicht zwingend erforderlich.

Die erfindungsgemäße Ausgestaltung des Verbindungskanals wird vorzugsweise zusammen mit einer Dichtungsanordnung verwendet, welche separate Dichtlinien um mindestens einen Mediumkanal einerseits und um das zugeordnete Strömungsfeld andererseits umfasst.

Vorzugsweise verläuft eine den Mediumkanal abdichtende Dichtlinie der Dichtungsanordnung über einen mediumkanalseitigen Abschnitt des Verbindungskanals und eine das Strömungsfeld abdichtende Dichtlinie der Dichtungsanordnung über einen strömungsfeldseitigen Abschnitt des Verbindungskanals.

Durch den Versatz zwischen den strömungsfeldseitigen Rändern der strömungsfeldseitigen Mündungsöffnung des Verbindungskanals relativ zu den mediumkanalseitigen Rändern der mediumkanalseitigen Mündungsöffnung des Verbindungskanals kann der Radius in der Führung der Dichtlinie um den Mediumkanal groß bleiben, was die Dichtungsauslegung vereinfacht.

Bei einer bevorzugten Ausgestaltung der Erfindung ist vorgesehen, dass die Bipolarplatte mehrere, vorzugsweise zwei, Lagen umfasst, die im Bereich der mediumkanalseitigen Mündungsöffnung und der strömungsfeldseitigen Mündungsöffnung des Verbindungskanals zumindest abschnittsweise voneinander beabstandet sind.

Vorzugsweise liegen die Lagen der Bipolarplatte längs einer Kontaktebene aneinander an und weist mindestens eine der Lagen einen an den ersten mediumkanalseitigen Rand der mediumkanalseitigen Mündungsöffnung angrenzenden ersten mediumkanalseitigen Rampenbereich, einen an den ersten strömungsfeldseitigen Rand der strömungsfeldseitigen Mündungsöffnung angrenzenden ersten strömungsfeldseitigen Rampenbereich, einen an den zweiten mediumkanalseitigen Rand der mediumkanalseitigen Mündungsöffnung angrenzenden zweiten mediumkanalseitigen Rampenbereich und/oder einen an den zweiten strömungsfeldseitigen Rand der strömungsfeldseitigen Mündungsöffnung angrenzenden zweiten strömungsfeldseitigen Rampenbereich auf, wobei der jeweilige Rampenbereich gegenüber der Kontaktebene, vorzugsweise unter einem spitzen Winkel α, geneigt ist.

Vorzugsweise ist vorgesehen, dass eine Lage der Bipolarplatte mindestens einen gegenüber der Kontaktebene geneigten Rampenbereich aufweist, welcher an denselben Rand einer Mündungsöffnung des Verbindungskanals angrenzt wie ein gegenüber der Kontaktebene geneigter Rampenbereich der jeweils anderen Lage der Bipolarplatte.

Der jeweilige Rampenbereich ist vorzugsweise gegenüber der Kontaktebene um einen Winkel von höchstens 45°, insbesondere höchstens 30°, besonders bevorzugt höchstens 20°, beispielsweise höchstens 10°, geneigt.

Ferner ist der jeweilige Rampenbereich gegenüber der Kontaktebene vorzugsweise um einen Winkel von mindestens 2°, insbesondere von mindestens 3°, geneigt.

Besonders bevorzugt ist jedem gegenüber der Kontaktebene geneigten Rampenbereich der einen Lage der Bipolarplatte ein an denselben Rand einer Mündungsöffnung des Verbindungskanals angrenzender, gegenüber der Kontaktebene geneigter Rampenbereich der jeweils anderen Lage der Bipolarplatte zugeordnet.

Um sicherzustellen, dass der Verbindungskanal auch nach dem Verspannen der elektrochemischen Einheiten der elektrochemischen Vorrichtung gegeneinander geöffnet bleibt, kann vorgesehen sein, dass mindestens ein Abstützelement in dem Verbindungskanal zwischen den zwei Lagen der Bipolarplatte angeordnet ist.

Insbesondere kann vorgesehen sein, dass mindestens eine der Lagen der Bipolarplatte mit einem oder mehreren Abstützbereichen versehen ist, mit welchen die betreffende Lage der Bipolarplatte sich an der jeweils anderen Lage abstützt.

Ein solcher Abstützbereich kann beispielsweise in Form eines runden oder länglichen Napfes oder eines Steges ausgebildet sein.

Ein solcher Abstützbereich oder ein einen solchen Abstützbereich umfassendes Abstützelement ist vorzugsweise einstückig mit einer der Lagen der Bipolarplatte ausgebildet.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine ausschnittsweise Draufsicht auf eine elektrochemische Einheit einer mehrere längs einer Stapelrichtung aufeinanderfolgende elektrochemische Einheiten umfassenden elektrochemischen Vorrichtung, im Bereich einer Brenngaszufuhr und einer Kühlmittelzufuhr;
- Fig. 2: einen Schnitt durch den Verbindungskanal zwischen einem Kühlmittel-Mediumkanal und einem Kühlmittel-Strömungsfeld der elektrochemischen Einheit aus Fig. 1, längs der Linie 2 - 2 in Fig. 1;
- Fig. 3: einen weiteren Schnitt durch den Verbindungskanal zwischen dem Kühlmittel-Mediumkanal und dem Kühlmittel-Strömungsfeld der elektrochemischen Einheit aus Fig. 1, längs der Linie 3 - 3 in Fig. 1;
- Fig. 4: einen Schnitt durch einen äußeren Randbereich der elektrochemischen Einheit aus Fig. 1 im Bereich des Kühlmittel-Mediumkanals, längs der Linie 4 - 4 in Fig. 1;
- Fig. 5: einen Schnitt durch einen Steg der elektrochemischen Einheit aus Fig. 1 zwischen dem Brenngas-Mediumkanal und einem Oxidationsmittel-Mediumkanal, längs der Linie 5 - 5 in Fig. 1; und
- Fig. 6: einen Schnitt durch einen mediumkanalseitigen Bereich eines Verbindungskanals zwischen dem Brenngas-Mediumkanal und dem Brenngas-Strömungsfeld der elektrochemischen Einheit aus Fig. 1, längs der Linie 6 - 6 in Fig. 1.

Gleiche oder funktional äquivalente Elemente sind in allen Figuren mit denselben Bezugszeichen bezeichnet.

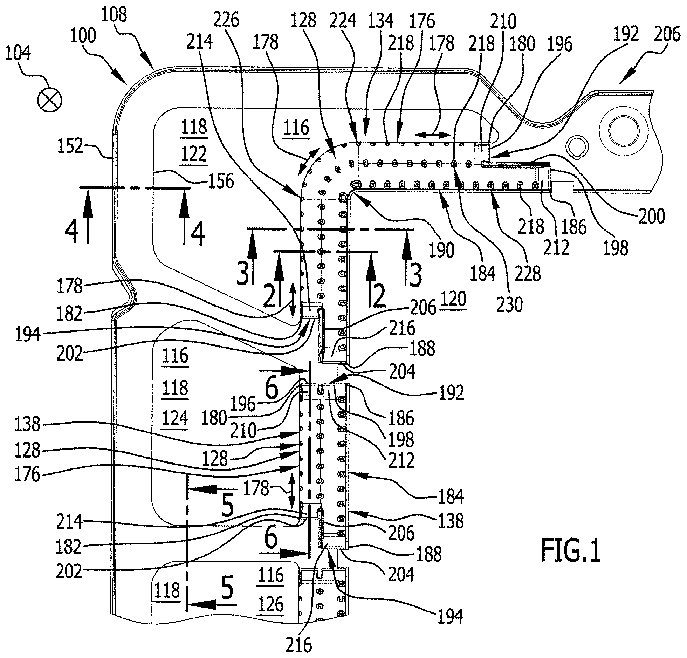

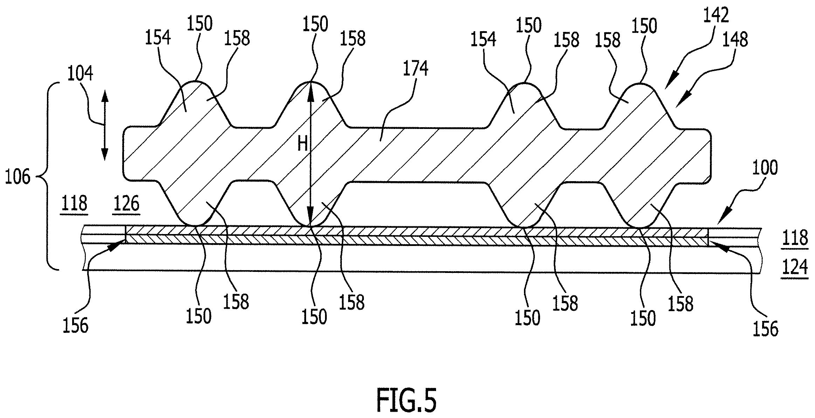

Eine in den Fig. 1 bis 6 ausschnittsweise dargestellte, als Ganzes mit 100 bezeichnete elektrochemische Vorrichtung, beispielsweise ein Brennstoffzellenstapel oder ein Elektrolyseur, umfasst einen Stapel, der mehrere in einer Stapelrichtung 104 aufeinanderfolgende elektrochemische Einheiten 106, beispielsweise Brennstoffzelleneinheiten oder Elektrolyseeinheiten, und eine (nicht dargestellte) Spannvorrichtung zum Beaufschlagen der elektrochemischen Einheit mit einer längs der Stapelrichtung 104 gerichteten Spannkraft umfasst.

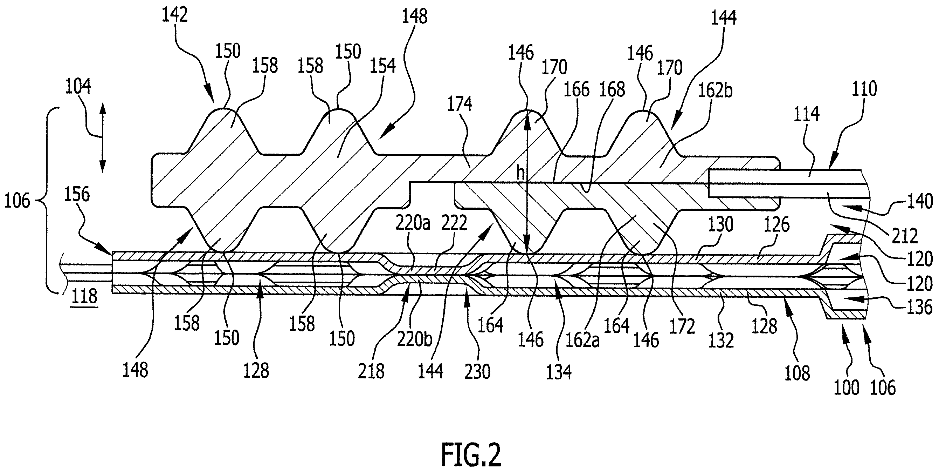

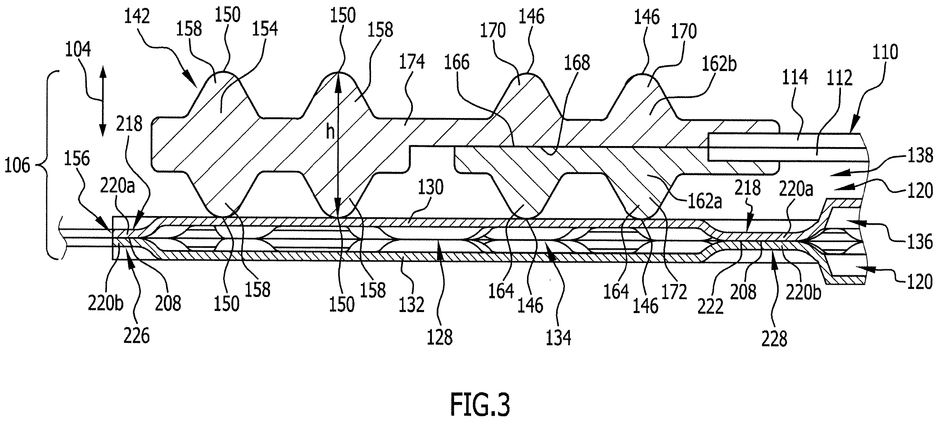

Wie am besten aus den Fig. 2 und 3 zu ersehen ist, umfasst jede elektrochemische Einheit 106 der elektrochemischen Vorrichtung 100 jeweils eine Bipolarplatte 108 und eine Membran-Elektroden-Anordnung (MEA) 110.

Die Membran-Elektroden-Anordnung 110 umfasst beispielsweise eine katalysatorbeschichtete Membran ("catalyst coated membrane"; CCM) und zwei Gasdiffusionslagen 112 und 114, wobei eine erste Gasdiffusionslage 112 anodenseitig und eine zweite Gasdiffusionslage 114 kathodenseitig angeordnet ist.

Die Bipolarplatte 108 ist beispielsweise aus einem metallischen Material gebildet.

Die Bipolarplatte 108 weist mehrere Medium-Durchtrittsöffnungen 116 auf, durch welche jeweils ein der elektrochemischen Vorrichtung 100 zuzuführendes fluides Medium (im Falle eines Brennstoffzellenstapels beispielsweise ein Brenngas, ein Oxidationsmittel oder ein Kühlmittel) durch die Bipolarplatte 108 hindurchtreten kann.

Die Medium-Durchtrittsöffnungen 116 der im Stapel aufeinanderfolgenden Bipolarplatten 108 und die in der Stapelrichtung 104 zwischen den Medium-Durchtrittsöffnungen 116 liegenden Zwischenräume bilden zusammen jeweils einen Mediumkanal 118.

Jedem Mediumkanal 118, durch welchen ein fluides Medium der elektrochemischen Vorrichtung 100 zuführbar ist, ist jeweils mindestens ein anderer Mediumkanal zugeordnet, durch welchen das betreffende fluide Medium aus der elektrochemischen Vorrichtung 100 abführbar ist.

Durch ein dazwischen liegendes Strömungsfeld 120, welches vorzugsweise an einer Oberfläche einer benachbarten Bipolarplatte 108 oder (beispielsweise im Falle eines Kühlmittel-Strömungsfeldes) im Zwischenraum zwischen den Lagen einer mehrlagigen Bipolarplatte 108 ausgebildet ist, kann das Medium aus dem ersten Mediumkanal 118 quer, vorzugsweise im Wesentlichen senkrecht, zu der Stapelrichtung 104 zu dem zweiten Mediumkanal strömen.

In Fig. 1 ist beispielsweise ein Mediumkanal 122 für ein Kühlmittel der elektrochemischen Vorrichtung 100, ein Mediumkanal 124 für ein Brenngas der elektrochemischen Vorrichtung 100 und ein Mediumkanal 126 für ein Oxidationsmittel der elektrochemischen Vorrichtung 100 dargestellt.

Durch jeweils einen Verbindungskanal 128 steht jeder Mediumkanal 118 in Fluidverbindung mit dem jeweils zugeordneten Strömungsfeld 120.

Jede Bipolarplatte 108 umfasst bei der in den Zeichnungen dargestellten Ausführungsform eine erste Lage 130 und eine zweite Lage 132, die längs (nicht dargestellter) Verbindungslinien, vorzugsweise stoffschlüssig, insbesondere durch Verschweißen, beispielsweise durch Laserschweißen, fluiddicht aneinander festgelegt sind.

Wie aus Fig. 1 zu ersehen ist, steht der Mediumkanal 122 für Kühlmittel über einen Verbindungskanal 134 für Kühlmittel, der durch einen Zwischenraum zwischen der ersten Lage 130 und der zweiten Lage 132 der Bipolarplatte 108 ausgebildet ist, in Fluidverbindung mit einem Strömungsfeld 136 für das Kühlmittel, welches im Zwischenraum zwischen der ersten Lage 130 und der zweiten Lage 132 der Bipolarplatte 108 ausgebildet ist.

Wie ferner aus Fig. 1 zu ersehen ist, steht der Mediumkanal 124 für Brenngas über einen Verbindungskanal 138 für Brenngas in Fluidverbindung mit einem Strömungsfeld 140 für das Brenngas, welches zwischen der ersten Lage 126 der Bipolarplatte 108 und der ersten Gasdiffusionslage 112 ausgebildet ist. Um die Strömung der Medien durch die jeweils zugeordneten Strömungsfelder 120 zu führen, sind die erste Lage 130 und die zweite Lage 132 der Bipolarplatte 108 im Bereich der Strömungsfelder 120 mit (nicht dargestellten) Strömungsleitelementen versehen, welche beispielsweise in Form erhabener Sicken ausgebildet sein können.

Ein unerwünschtes Austreten der fluiden Medien aus den Mediumkanälen 118 und den Strömungsfeldern 120 der elektrochemischen Vorrichtung 100 wird durch eine Dichtungsanordnung 142 vermieden.

Die Dichtungsanordnung 142 umfasst einen Strömungsfeld-Abschnitt 144 mit einer oder mehreren, im dargestellten Ausführungsbeispiel mit zwei, Dichtlinien 146, welche zwischen den Strömungsfeldern 120 einerseits und den Mediumkanälen 118 andererseits verlaufen und die Verbindungskanäle 128 queren, durch welche die Strömungsfelder 120 mit den jeweils zugeordneten Mediumkanälen 118 in Fluidverbindung stehen.

Ferner umfasst die Dichtungsanordnung 142 Mediumkanal-Abschnitte 148 mit jeweils einer oder mehreren, im zeichnerisch dargestellten Ausführungsbeispiel mit jeweils zwei, Dichtlinien 150, welche jeweils einen der Mediumkanäle 118 zumindest abschnittsweise umgeben und den betreffenden Mediumkanal 118 von den Strömungsfeldern 120 und von einem äußeren Rand 152 der Bipolarplatte 108 trennen.

Die Mediumkanal-Abschnitte 148 der Dichtungsanordnung 142 umfassen jeweils ein Dichtelement 154, welches zwischen einer ersten Lage 130 einer Bipolarplatte 108 und einer zweiten Lage 132 einer in der Stapelrichtung 104 benachbarten (nicht dargestellten) weiteren Bipolarplatte angeordnet ist und sich im Wesentlichen parallel zu dem Rand 156 einer Medium-Durchtrittsöffnung 116 des betreffenden Mediumkanals 118 erstreckt.

Das Dichtelement 154 kann auf jeder Seite mit einer oder mehreren Dichtlippen 158 versehen sein.

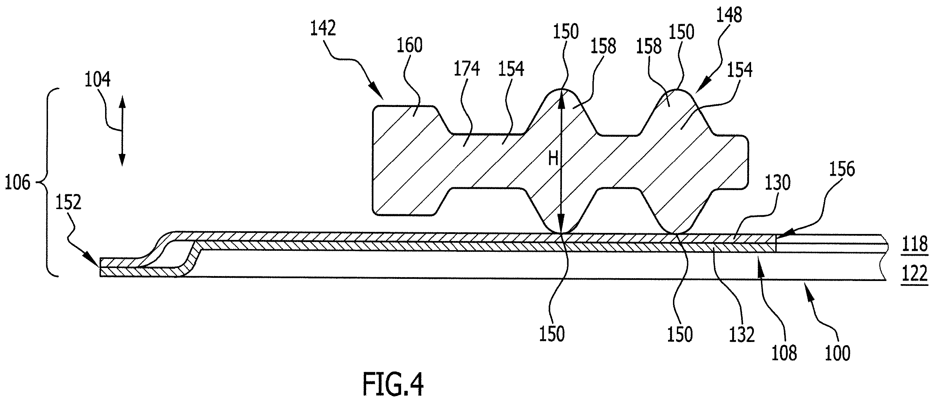

An seinem dem äußeren Rand 152 der Bipolarplatte 108 zugewandten Rand kann das Dichtelement 154 mit einem Blockbereich 160 versehen sein (siehe Fig. 4).

Der Strömungsfeld-Abschnitt 144 der Dichtungsanordnung 142 umfasst vorzugsweise zwei Dichtelemente 162a und 162b, welche ebenfalls zwischen der ersten Lage 130 der Bipolarplatte 108 und der zweiten Lage 132 der benachbarten Bipolarplatte angeordnet sind.

Dabei ist das erste Dichtelement 162a vorzugsweise an der (beispielsweise anodenseitigen) ersten Gasdiffusionslage 112 festgelegt und das zweite Dichtelement 162b vorzugsweise an der (beispielsweise kathodenseitigen) zweiten Gasdiffusionslage 114 der Membran-Elektroden-Anordnung 110 festgelegt.

Beispielsweise kann vorgesehen sein, dass die Dichtelemente 162a und 162b an die jeweils zugeordnete Gasdiffusionslage 112 beziehungsweise 114 angespritzt oder angegossen sind.

Dabei kann vorgesehen sein, dass das erste Dichtelement 162a eine oder mehrere Dichtlippen 164 aufweist, welche längs der Dichtlinien 146 an der ersten Lage 130 der Bipolarplatte 108 anliegen, und mit einer vorzugsweise im Wesentlichen ebenen Begrenzungsfläche 166 an einer ebenfalls, vorzugsweise im Wesentlichen ebenen, Begrenzungsfläche 168 des zweiten Dichtelements 162b anliegt, während das zweite Dichtelement 162b eine oder mehrere Dichtlippen 170 aufweist, mit denen das Dichtelement 162b längs der Dichtlinien 146 an der zweiten Lage 132 der benachbarten Bipolarplatte anliegt, und mit der, vorzugsweise im Wesentlichen ebenen, Begrenzungsfläche 168 an der Begrenzungsfläche 166 des ersten Dichtelements 162a anliegt.

Eines der Dichtelemente 162a, 162b, vorzugsweise das zweite Dichtelement 162b, kann einstückig mit dem Dichtelement 154 mindestens eines der Mediumkanal-Abschnitte 148 der Dichtungsanordnung 142 ausgebildet sein.

Die Dichtungsanordnung 142 kann somit zweiteilig ausgebildet sein, wobei ein erster Teil 172 der Dichtungsanordnung 142 das erste Dichtelement 162a des Strömungsfeld-Abschnitts 144 umfasst und vorzugsweise von der ersten Gasdiffusionslage 112 getragen ist und wobei ein zweiter Teil 174 der Dichtungsanordnung 142 das zweite Dichtelement 162b des Strömungsfeld-Abschnitts 144 und die Dichtelemente 154 der Mediumkanal-Abschnitte 148 umfasst und vorzugsweise von der zweiten Gasdiffusionslage 114 getragen ist.

Da die erste Lage 130 und die zweite Lage 132 der Bipolarplatte 108 im Bereich eines Verbindungskanals 128 voneinander beabstandet sind (siehe insbesondere die Fig. 2, 3 und 6), weisen die Dichtelemente 162a, 162b und das Dichtelement 154 in diesem Bereich der Dichtungsanordnung 142 eine Gesamthöhe h auf, welche geringer ist als die Gesamthöhe H der Dichtungsanordnung 142 außerhalb des Bereichs der Verbindungskanäle 128. Dabei entspricht die Gesamthöhe h beziehungsweise H der Summe der Einzelhöhen des ersten Teils 172 der Dichtungsanordnung 142 und des zweiten Teils 174 der Dichtungsanordnung 142.

Jeder Verbindungskanal 128 weist eine mediumkanalseitige Mündungsöffnung 176 auf, die sich längs einer Umfangsrichtung 178 des jeweils zugeordneten Strömungsfelds 120 von einem ersten mediumkanalseitigen Rand 180 bis zu einem zweiten mediumkanalseitigen Rand 182 erstreckt.

Ferner weist jeder Verbindungskanal 128 eine strömungsfeldseitige Mündungsöffnung 184 auf, die sich längs der Umfangsrichtung 178 des Strömungsfelds 120 von einem ersten strömungsfeldseitigen Rand 186 bis zu einem zweiten strömungsfeldseitigen Rand 188 erstreckt.

Wie aus Fig. 1 zu ersehen ist, ist der erste strömungsfeldseitige Rand 186 der strömungsfeldseitigen Mündungsöffnung 184 des Verbindungskanals 134 für Kühlmittel bei der zeichnerisch dargestellten Ausführungsform gegenüber dem ersten mediumkanalseitigen Rand 180 der mediumkanalseitigen Mündungsöffnung 176 des Verbindungskanals 134 für Kühlmittel längs der Umfangsrichtung 178 des Strömungsfelds 120 von dem zweiten strömungsfeldseitigen Rand 182 der strömungsfeldseitigen Mündungsöffnung 184 des Verbindungskanals 134 für Kühlmittel weg versetzt, so dass die strömungsfeldseitige Mündungsöffnung 184 an ihrem ersten strömungsfeldseitigen Rand 186 längs der Umfangsrichtung 178 über den ersten mediumkanalseitigen Rand 180 der mediumkanalseitigen Mündungsöffnung 176 übersteht.

Ferner ist der zweite strömungsfeldseitige Rand 188 der strömungsfeldseitigen Mündungsöffnung 184 des Verbindungskanals 134 für Kühlmittel bei dieser Ausführungsform gegenüber dem zweiten mediumkanalseitigen Rand 182 der mediumkanalseitigen Mündungsöffnung 176 des Verbindungskanals 134 für Kühlmittel längs der Umfangsrichtung 178 des Strömungsfeldes 120 von dem ersten strömungsfeldseitigen Rand 186 der strömungsfeldseitigen Mündungsöffnung 184 weg versetzt, so dass die strömungsfeldseitige Mündungsöffnung 184 des Verbindungskanals 134 für Kühlmittel an ihrem zweiten strömungsfeldseitigen Rand 188 längs der Umfangsrichtung 178 des Strömungsfelds 120 über den zweiten mediumkanalseitigen Rand 182 der mediumkanalseitigen Mündungsöffnung 176 des Verbindungskanals 134 für Kühlmittel übersteht.

Die strömungsfeldseitige Mündungsöffnung 184 des Verbindungskanals 134 für Kühlmittel weist daher eine größere Fluiddurchtrittsfläche auf als die mediumkanalseitige Mündungsöffnung 176 des Verbindungskanals 134 für Kühlmittel.

Wie aus Fig. 1 zu ersehen ist, mündet die strömungsfeldseitige Mündungsöffnung 184 des Verbindungskanals 134 für Kühlmittel an einem Eckbereich 190 des zugeordneten Strömungsfelds 120, nämlich des Strömungsfelds 136 für Kühlmittel.

Der erste mediumkanalseitige Rand 180 der mediumkanalseitigen Mündungsöffnung 176 des Verbindungskanals 134 für Kühlmittel ist mit dem ersten strömungsfeldseitigen Rand 186 der strömungsfeldseitigen Mündungsöffnung 184 des Verbindungskanals 134 für Kühlmittel durch eine erste Randlinie 192 verbunden, welche eine erste seitliche Begrenzung des Verbindungskanals 134 für Kühlmittel bildet.

Der zweite mediumkanalseitige Rand 182 der mediumkanalseitigen Mündungsöffnung 176 des Verbindungskanals 134 für Kühlmittel ist mit dem zweiten strömungsfeldseitigen Rand 188 der strömungsfeldseitigen Mündungsöffnung 184 des Verbindungskanals 134 für Kühlmittel durch eine zweite Randlinie 194 verbunden, welche eine zweite seitliche Begrenzung des Verbindungskanals 134 für Kühlmittel bildet.

Wie aus Fig. 1 zu ersehen ist, sind sowohl die erste Randlinie 192 als auch die zweite Randlinie 194 jeweils gestuft ausgebildet.

Insbesondere umfasst die erste Randlinie 192 einen sich von dem ersten mediumkanalseitigen Rand 180 der mediumkanalseitigen Mündungsöffnung 176 des Verbindungskanals 134 für Kühlmittel im Wesentlichen senkrecht zur Umfangsrichtung 178 des Strömungsfelds 120 und senkrecht zur Stapelrichtung 104 weg erstreckenden ersten mediumkanalseitigen Randlinienabschnitt 196 und einen sich von dem ersten strömungsfeldseitigen Rand 186 der strömungsfeldseitigen Mündungsöffnung 184 des Verbindungskanals 134 für Kühlmittel im Wesentlichen senkrecht zur Umfangsrichtung 178 des Strömungsfelds 120 und senkrecht zur Stapelrichtung 104 weg erstreckenden ersten strömungsfeldseitigen Randlinienabschnitt 198.

Der erste mediumkanalseitige Randlinienabschnitt 196 und der erste strömungsfeldseitige Randlinienabschnitt 198 sind durch einen sich im Wesentlichen parallel zur Umfangsrichtung 178 des Strömungsfelds 120 erstreckenden ersten zentralen Randlinienabschnitt 200 miteinander verbunden.

Die zweite Randlinie 194 umfasst einen sich von dem zweiten mediumkanalseitigen Rand 182 der mediumkanalseitigen Mündungsöffnung 176 des Verbindungskanals 134 für Kühlmittel im Wesentlichen senkrecht zur Umfangsrichtung 178 des Strömungsfelds 120 und senkrecht zur Stapelrichtung 104 weg erstreckenden zweiten mediumkanalseitigen Randlinienabschnitt 202 und einen sich von dem zweiten strömungsfeldseitigen Rand 188 der strömungsfeldseitigen Mündungsöffnung 184 des Verbindungskanals 134 für Kühlmittel im Wesentlichen senkrecht zur Umfangsrichtung 178 des Strömungsfelds 120 und senkrecht zur Stapelrichtung 104 weg erstreckenden zweiten strömungsfeldseitigen Randlinienabschnitt 204.

Der zweite mediumkanalseitige Randlinienabschnitt 202 ist mit dem zweiten strömungsfeldseitigen Randlinienabschnitt 204 durch einen sich im Wesentlichen parallel zu der Umfangsrichtung 178 des Strömungsfelds 120 erstreckenden zweiten zentralen Randlinienabschnitt 206 verbunden.

Wie aus den Fig. 2, 3 und 6 zu ersehen ist, liegen die beiden Lagen 130 und 132 der Bipolarplatte 108 längs einer Kontaktebene 208, welche senkrecht zur Stapelrichtung 104 ausgerichtet ist, aneinander an.

Beim zeichnerisch dargestellten Ausführungsbeispiel umfasst jede der Lagen 130, 132 der Bipolarplatte 108 jeweils einen an den ersten mediumkanalseitigen Rand 180 der mediumkanalseitigen Mündungsöffnung 176 des Verbindungskanals 134 für Kühlmittel angrenzenden ersten mediumkanalseitigen Rampenbereich 210, einen an den ersten strömungsfeldseitigen Rand 186 der strömungsfeldseitigen Mündungsöffnung 184 angrenzenden ersten strömungsfeldseitigen Rampenbereich 212, einen an den zweiten mediumkanalseitigen Rand 182 der mediumkanalseitigen Mündungsöffnung 176 des Verbindungskanals 134 für Kühlmittel angrenzenden zweiten mediumkanalseitigen Rampenbereich 214 und einen an den zweiten strömungsfeldseitigen Rand 188 der strömungsfeldseitigen Mündungsöffnung 184 des Verbindungskanals 134 für Kühlmittel angrenzenden zweiten strömungsfeldseitigen Rampenbereich 216.

Dabei ist jeder der Rampenbereiche 210, 212, 214 und 216 vorzugsweise im Wesentlichen eben ausgebildet.

Vorzugsweise ist jeder der Rampenbereiche 210, 212, 214 und 216 gegenüber der Kontaktebene 208 der Lagen 130, 132 der Bipolarplatte 108 um einen Winkel von vorzugsweise höchstens 45°, insbesondere höchstens ungefähr 30°, besonders bevorzugt höchstens ungefähr 20°, beispielsweise höchstens ungefähr 10°, geneigt.

Ferner ist jeder der Rampenbereiche 210, 212, 214 und 216 gegenüber der Kontaktebene 208 der Lagen 130, 132 der Bipolarplatte 108 um einen Winkel von vorzugsweise mindestens ungefähr 2°, insbesondere von mindestens ungefähr 3°, geneigt.

Dabei sind die Rampenbereiche 210, 212, 214 und 216 der ersten Lage 130 der Bipolarplatte 108 vorzugsweise bezüglich der Kontaktebene 208 im Wesentlichen spiegelsymmetrisch zu den Rampenbereichen 210, 212, 214 und 216 der zweiten Lage 132 der Bipolarplatte 108 angeordnet und ausgebildet.

Wie ferner aus Fig. 1 zu ersehen ist, ist der erste strömungsfeldseitige Rand 186 der strömungsfeldseitigen Mündungsöffnung 184 des Verbindungskanals 138 für Brenngas bei der zeichnerisch dargestellten Ausführungsform gegenüber dem ersten mediumkanalseitigen Rand 180 der mediumkanalseitigen Mündungsöffnung 176 des Verbindungskanals 138 für Brenngas nicht längs der Umfangsrichtung 178 des Strömungsfelds 120 versetzt, so dass die strömungsfeldseitige Mündungsöffnung 184 an ihrem ersten strömungsfeldseitigen Rand 186 an derselben Position bezüglich der Umfangsrichtung 178 des Strömungsfelds 120 endet wie die mediumkanalseitige Mündungsöffnung 176.

Der zweite strömungsfeldseitige Rand 188 der strömungsfeldseitigen Mündungsöffnung 184 des Verbindungskanals 138 für Brenngas ist bei dieser Ausführungsform gegenüber dem zweiten mediumkanalseitigen Rand 182 der mediumkanalseitigen Mündungsöffnung 176 des Verbindungskanals 138 für Brenngas längs der Umfangsrichtung 178 des Strömungsfeldes 120 von dem ersten strömungsfeldseitigen Rand 186 der strömungsfeldseitigen Mündungsöffnung 184 weg versetzt, so dass die strömungsfeldseitige Mündungsöffnung 184 des Verbindungskanals 138 für Brenngas an ihrem zweiten strömungsfeldseitigen Rand 188 längs der Umfangsrichtung 178 des Strömungsfelds 120 über den zweiten mediumkanalseitigen Rand 182 der mediumkanalseitigen Mündungsöffnung 176 des Verbindungskanals 138 für Brenngas übersteht.

Die strömungsfeldseitige Mündungsöffnung 184 des Verbindungskanals 138 für Brenngas weist daher eine größere Fluiddurchtrittsfläche auf als die mediumkanalseitige Mündungsöffnung 176 des Verbindungskanals 138 für Brenngas.

Der erste mediumkanalseitige Rand 180 der mediumkanalseitigen Mündungsöffnung 176 des Verbindungskanals 138 für Brenngas ist mit dem ersten strömungsfeldseitigen Rand 186 der strömungsfeldseitigen Mündungsöffnung 184 des Verbindungskanals 138 für Brenngas durch eine erste Randlinie 192 verbunden, welche eine erste seitliche Begrenzung des Verbindungskanals 138 für Brenngas bildet.

Der zweite mediumkanalseitige Rand 182 der mediumkanalseitigen Mündungsöffnung 176 des Verbindungskanals 138 für Brenngas ist mit dem zweiten strömungsfeldseitigen Rand 188 der strömungsfeldseitigen Mündungsöffnung 184 des Verbindungskanals 138 für Brenngas durch eine zweite Randlinie 194 verbunden, welche eine zweite seitliche Begrenzung des Verbindungskanals 138 für Brenngas bildet.

Wie aus Fig. 1 zu ersehen ist, ist die erste Randlinie 192 des Verbindungskanals 138 für Brenngas im Wesentlichen geradlinig ausgebildet.

Wie aus Fig. 1 ferner zu ersehen ist, ist die zweite Randlinie 194 des Verbindungskanals 138 für Brenngas gestuft ausgebildet.

Die erste Randlinie 192 des Verbindungskanals 138 für Brenngas umfasst einen sich von dem ersten mediumkanalseitigen Rand 180 der mediumkanalseitigen Mündungsöffnung 176 im Wesentlichen senkrecht zur Umfangsrichtung 178 des Strömungsfelds 120 und senkrecht zur Stapelrichtung 104 weg erstreckenden ersten mediumkanalseitigen Randlinienabschnitt 196 und einen sich von dem ersten strömungsfeldseitigen Rand 186 der strömungsfeldseitigen Mündungsöffnung 184 des Verbindungskanals 138 für Brenngas im Wesentlichen senkrecht zur Umfangsrichtung 178 des Strömungsfelds 120 und senkrecht zur Stapelrichtung 104 weg erstreckenden ersten strömungsfeldseitigen Randlinienabschnitt 198.

Der erste mediumkanalseitige Randlinienabschnitt 196 und der erste strömungsfeldseitige Randlinienabschnitt 198 sind im Wesentlichen miteinander fluchtend ausgebildet.

Die zweite Randlinie 194 des Verbindungskanals 138 für Brenngas umfasst einen sich von dem zweiten mediumkanalseitigen Rand 182 der mediumkanalseitigen Mündungsöffnung 176 des Verbindungskanals 138 für Brenngas im Wesentlichen senkrecht zur Umfangsrichtung 178 des Strömungsfelds 120 und senkrecht zur Stapelrichtung 104 weg erstreckenden zweiten mediumkanalseitigen Randlinienabschnitt 202 und einen sich von dem zweiten strömungsfeldseitigen Rand 188 der strömungsfeldseitigen Mündungsöffnung 184 des Verbindungskanals 138 für Brenngas im Wesentlichen senkrecht zur Umfangsrichtung 178 des Strömungsfelds 120 und senkrecht zur Stapelrichtung 104 weg erstreckenden zweiten strömungsfeldseitigen Randlinienabschnitt 204.

Der zweite mediumkanalseitige Randlinienabschnitt 202 ist mit dem zweiten strömungsfeldseitigen Randlinienabschnitt 204 durch einen sich im Wesentlichen parallel zu der Umfangsrichtung 178 des Strömungsfelds 120 erstreckenden zweiten zentralen Randlinienabschnitt 206 verbunden.

Beim zeichnerisch dargestellten Ausführungsbeispiel umfasst jede der Lagen 130, 132 der Bipolarplatte 108 jeweils einen an den ersten mediumkanalseitigen Rand 180 der mediumkanalseitigen Mündungsöffnung 176 des Verbindungskanals 138 für Brenngas angrenzenden ersten mediumkanalseitigen Rampenbereich 210, einen an den ersten strömungsfeldseitigen Rand 186 der strömungsfeldseitigen Mündungsöffnung 184 des Verbindungskanals 138 für Brenngas angrenzenden ersten strömungsfeldseitigen Rampenbereich 212, einen an den zweiten mediumkanalseitigen Rand 182 der mediumkanalseitigen Mündungsöffnung 176 des Verbindungskanals 138 für Brenngas angrenzenden zweiten mediumkanalseitigen Rampenbereich 214 und einen an den zweiten strömungsfeldseitigen Rand 188 der strömungsfeldseitigen Mündungsöffnung 184 des Verbindungskanals 138 für Brenngas angrenzenden zweiten strömungsfeldseitigen Rampenbereich 216.

Dabei ist jeder der Rampenbereiche 210, 212, 214 und 216 der Lagen 130, 132 der Bipolarplatte 108 im Bereich des Verbindungskanals 138 für Brenngas vorzugsweise im Wesentlichen eben ausgebildet.

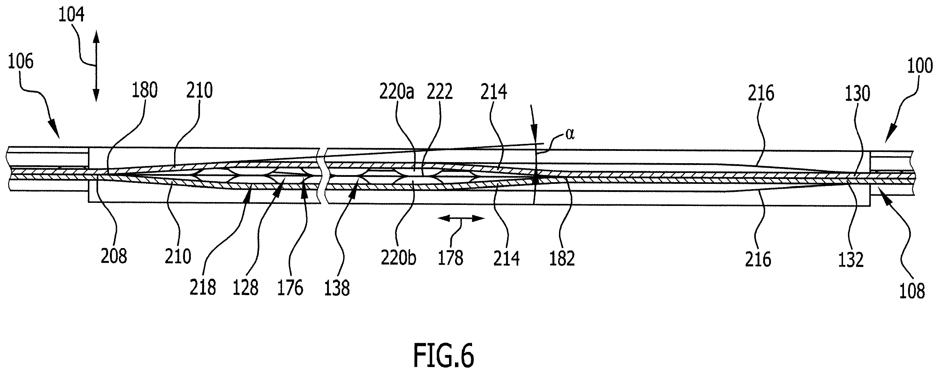

Wie aus Fig. 6 zu ersehen ist, ist vorzugsweise jeder der Rampenbereiche 210, 212, 214 und 216 des Verbindungskanals 138 für Brenngas gegenüber der Kontaktebene 208 der Lagen 130, 132 der Bipolarplatte 108 um einen spitzen Winkel α von vorzugsweise höchstens 45°, insbesondere höchstens ungefähr 30°, besonders bevorzugt höchstens ungefähr 20°, beispielsweise höchstens ungefähr 10°, geneigt.

Ferner ist jeder der Rampenbereiche 210, 212, 214 und 216 im Bereich des Verbindungskanals 138 für Brenngas gegenüber der Kontaktebene 208 der Lagen 130, 132 der Bipolarplatte 108 um einen spitzen Winkel α von vorzugsweise mindestens ungefähr 2°, insbesondere von mindestens ungefähr 3°, geneigt.

Dabei sind die Rampenbereiche 210, 212, 214 und 216 der ersten Lage 130 der Bipolarplatte 108 vorzugsweise bezüglich der Kontaktebene 208 im Wesentlichen spiegelsymmetrisch zu den Rampenbereichen 210, 212, 214 und 216 der zweiten Lage 132 der Bipolarplatte 108 angeordnet und ausgebildet.

Bei der zeichnerisch dargestellten Ausführungsform einer elektrochemischen Vorrichtung 100 bleibt der Abstand zwischen den beiden Lagen 130 und 132 der Bipolarplatte 108, welche einen Verbindungskanal 128 begrenzen, auch dann erhalten, wenn die elektrochemischen Einheiten 106 der elektrochemischen Vorrichtung 100 in der Stapelrichtung 104 gegeneinander verspannt werden, weil ein oder vorzugsweise mehrere Abstützelemente 218 im jeweiligen Verbindungskanal 128 zwischen den zwei Lagen 130 und 132 der Bipolarplatte 108 angeordnet sind.

Insbesondere kann vorgesehen sein, dass ein solches Abstützelement 218 einen Abstützbereich 220a der ersten Lage 130 der Bipolarplatte 108 umfasst, welcher zu der zweiten Lage 132 der Bipolarplatte 108 hin vorspringt, und/oder einen Abstützbereich 210b der zweiten Lage 132 der Bipolarplatte 108 umfasst, welcher zu der ersten Lage 130 der Bipolarplatte 108 hin vorspringt.

Vorzugsweise umfasst ein solches Abstützelement 218 einen an der ersten Lage 130 der Bipolarplatte 108 vorgesehenen Abstützbereich 220a und einen an der zweiten Lage 132 der Bipolarplatte 108 vorgesehenen Abstützbereich 220b.

Dabei liegen die Abstützbereiche 220a, 220b aneinander an, vorzugweise an einer im Wesentlichen parallel zu der Kontaktebene 208 der Bipolarplatte 108 ausgerichteten Abstützfläche 222, so dass die Abstützbereiche 220a, 220b sich aneinander abstützen.

Die Abstützbereiche 220a, 220b können beispielsweise in Form von Noppen, Näpfen oder Stegen ausgebildet sein.

Die Abstützbereiche 220a, 220b sind vorzugsweise einstückig mit jeweils einer der beiden abgestützten Lagen 130, 132 der Bipolarplatte 108 ausgebildet und vorzugsweise durch einen Umformvorgang, insbesondere einen Präge- oder Tiefziehvorgang, an der jeweiligen Lage 130 oder 132 ausgebildet.

Das den Verbindungskanal 128 durchströmende fluide Medium strömt vorzugsweise seitlich an den Abstützelementen 218 vorbei.

Wie am besten aus Fig. 1 zu ersehen ist, können in einem Verbindungskanal 128, beispielsweise im Verbindungskanal 134 für Kühlmittel oder im Verbindungskanal 138 für Brenngas, eine oder mehrere Reihen 224 von Abstützelementen 218 vorgesehen sein, wobei jede Reihe 224 von Abstützelementen 218 mehrere längs der Umfangsrichtung 178 des jeweils zugeordneten Strömungsfelds 120 aufeinanderfolgende und längs der Umfangsrichtung 178 voneinander beabstandete Abstützelemente 218 umfasst.

Insbesondere kann vorgesehen sein, dass im Bereich eines Verbindungskanals 128 eine mediumkanalseitige Reihe 226 von Abstützelementen 218 vorgesehen ist, welche im Bereich der mediumkanalseitigen Mündungsöffnung 176 des Verbindungskanals 128 angeordnet sind und die mediumkanalseitige Mündungsöffnung 176 in längs der Umfangsrichtung 178 aufeinander folgende Teil-Mündungsöffnungen unterteilen.

Ferner kann im Bereich eines Verbindungskanals 128 eine strömungsfeldseitige Reihe 228 von Abstützelementen 218 vorgesehen sein, welche an der strömungsfeldseitigen Mündungsöffnung 184 des Verbindungskanals 128 angeordnet sind und die strömungsfeldseitige Mündungsöffnung 184 in längs der Umfangsrichtung 178 aufeinander folgende Teil-Mündungsöffnungen unterteilen.

Ferner kann im Bereich eines Verbindungskanals 128 eine zentrale Reihe 230 von Abstützelementen 218 vorgesehen sein, welche zwischen der mediumkanalseitigen Mündungsöffnung 176 und der strömungsfeldseitigen Mündungsöffnung 184 des Verbindungskanals 128 angeordnet sind, längs der Umfangsrichtung 178 des Strömungsfelds 120 aufeinanderfolgen und längs der Umfangsrichtung 178 des Strömungsfeld 120 voneinander beabstandet sind.

Vorzugsweise weisen alle Abstützelemente 218 der zentralen Reihe 230 von Abstützelementen 218 im Wesentlichen denselben Abstand von der mediumkanalseitigen Mündungsöffnung 176 des Verbindungskanals 128 auf.

Ferner weisen vorzugsweise alle Abstützelemente 218 der zentralen Reihe 230 von Abstützelementen 218 im Wesentlichen denselben Abstand von der strömungsfeldseitigen Mündungsöffnung 184 des Verbindungskanals 128 auf.

Dabei kann der Abstand der Abstützelemente 218 der zentralen Reihe 230 von Abstützelementen 218 von der mediumkanalseitigen Mündungsöffnung 176 im Wesentlichen gleich groß sein wie der Abstand der Abstützelemente 218 der zentralen Reihe 230 von Abstützelementen 218 von der strömungsfeldseitigen Mündungsöffnung 184; der Abstand der Abstützelemente 218 der zentralen Reihe 230 von Abstützelementen 218 von der mediumkanalseitigen Mündungsöffnung 176 kann aber auch größer oder kleiner sein als der Abstand der Abstützelemente 218 der zentralen Reihe 230 von Abstützelementen 218 von der strömungsfeldseitigen Mündungsöffnung 184.

Die Abstützelemente 218 der verschiedenen Reihen 224 von Abstützelementen 218 können im Wesentlichen dieselbe Größe oder unterschiedliche Größen aufweisen.

Wie am besten aus Fig. 1 zu ersehen ist, kann insbesondere vorgesehen sein, dass die Abstützelemente 218 der mediumkanalseitigen Reihe 226 von Abstützelementen 218 einen kleineren (senkrecht zur Stapelrichtung 104 genommenen) Querschnitt aufweisen als die Abstützelemente 218 der zentralen Reihe 230 von Abstützelementen 218 und/oder als die Abstützelemente 218 der strömungsfeldseitigen Reihe 228 von Abstützelementen 218.

Die Abstützelemente 218 der zentralen Reihe 230 von Abstützelementen 218 weisen vorzugsweise einen (senkrecht zur Stapelrichtung 104 genommenen) Querschnitt auf, welcher größer ist als der (senkrecht zur Stapelrichtung 104 genommene) Querschnitt der Abstützelemente 218 der mediumkanalseitigen Reihe 226 von Abstützelementen 218 und/oder kleiner ist als der (senkrecht zur Stapelrichtung 104 genommene) Querschnitt der Abstützelemente 218 der strömungsfeldseitigen Reihe 228 von Abstützelementen 218.

Die Abstützelemente 218 der strömungsfeldseitigen Reihe 228 von Abstützelementen 218 weisen vorzugsweise einen (senkrecht zur Stapelrichtung 104 genommenen) Querschnitt auf, welcher größer ist als der (senkrecht zur Stapelrichtung 104 genommene) Querschnitt der Abstützelement 218 der mediumkanalseitigen Reihe 226 von Abstützelementen 218 und/oder größer ist als der (senkrecht zur Stapelrichtung 104 genommene) Querschnitt der Abstützelemente 218 der zentralen Reihe 230 von Abstützelementen 218.

Durch die den Verbindungskanal 128 abstützenden Abstützelemente 218 ist der Verbindungskanal 128 in der Stapelrichtung 104 stabilisiert, so dass die strömungsfeldseitige Mündungsöffnung 184 des Verbindungskanals 128 und/oder die mediumkanalseitige Mündungsöffnung 176 des Verbindungskanals 128 vergrößert werden kann und somit ein größerer Volumenstrom von fluidem Medium durch den Verbindungskanal 128 erzielt werden kann.

Hierdurch kann der Druckverlust beim Durchströmen des Verbindungskanals 128 reduziert werden.

## Patentansprüche

1. Elektrochemische Vorrichtung, umfassend
einen Stapel aus mehreren, längs einer Stapelrichtung (104) aufeinander folgenden elektrochemischen Einheiten (106), die jeweils eine elektrochemisch aktive Membran-Elektroden-Anordnung (110), eine Bipolarplatte (108) und eine Dichtungsanordnung (142) umfassen,
mindestens einen Mediumkanal (118), der sich längs der Stapelrichtung (104) durch mehrere der elektrochemischen Einheiten (106) hindurch erstreckt,
mindestens ein Strömungsfeld (120), durch welches ein Medium aus dem Mediumkanal (118) quer zu der Stapelrichtung (104) von dem Mediumkanal (118) zu einem anderen Mediumkanal strömen kann, und mindestens einen Verbindungskanal (128), durch welchen das Strömungsfeld (120) und der Mediumkanal (118) in Fluidverbindung miteinander stehen,
wobei der Verbindungskanal (128) eine mediumkanalseitige Mündungsöffnung (176), die sich längs einer Umfangsrichtung (178) des Strömungsfelds (120) von einem ersten mediumkanalseitigen Rand (180) bis zu einem zweiten mediumkanalseitigen Rand (182) erstreckt, und
eine strömungsfeldseitige Mündungsöffnung (184), die sich längs der Umfangsrichtung (178) des Strömungsfelds (120) von einem ersten strömungsfeldseitigen Rand (186) bis zu einem zweiten strömungsfeldseitigen Rand (188) erstreckt, aufweist,
wobei der erste strömungsfeldseitige Rand (186) der strömungsfeldseitigen Mündungsöffnung (184) gegenüber dem ersten mediumkanalseitigen Rand (180) der mediumkanalseitigen Mündungsöffnung (176) längs der Umfangsrichtung (178) des Strömungsfelds (120) von dem zweiten strömungsfeldseitigen Rand (188) der strömungsfeldseitigen Mündungsöffnung (184) weg versetzt ist
und/oder
der zweite strömungsfeldseitige Rand (188) der strömungsfeldseitigen Mündungsöffnung (184) gegenüber dem zweiten mediumkanalseitigen Rand (182) der mediumkanalseitigen Mündungsöffnung (176) längs der Umfangsrichtung (178) des Strömungsfelds (120) von dem ersten strömungsfeldseitigen Rand (186) der strömungsfeldseitigen Mündungsöffnung (184) weg versetzt ist,
wobei der erste mediumkanalseitige Rand (180) der mediumkanalseitigen Mündungsöffnung (176) mit dem ersten strömungsfeldseitigen Rand (186) der strömungsfeldseitigen Mündungsöffnung (184) durch eine erste Randlinie (192) verbunden ist, welche eine erste seitliche Begrenzung des Verbindungskanals (128) bildet, und der zweite mediumkanalseitige Rand (182) der mediumkanalseitigen Mündungsöffnung (176) mit dem zweiten strömungsfeldseitigen Rand (188) der strömungsfeldseitigen Mündungsöffnung (184) durch eine zweite Randlinie (194) verbunden ist, welche eine zweite seitliche Begrenzung des Verbindungskanals (128) bildet, und
wobei die erste Randlinie (192) einen sich von dem ersten mediumkanalseitigen Rand (180) der mediumkanalseitigen Mündungsöffnung (176) im Wesentlichen senkrecht zu der Umfangsrichtung (178) des Strömungsfelds (120) weg erstreckenden ersten mediumkanalseitigen Randlinienabschnitt (196) und einen sich von dem ersten strömungsfeldseitigen Rand (186) der strömungsfeldseitigen Mündungsöffnung (184) im Wesentlichen senkrecht zu der Umfangsrichtung (178) des Strömungsfelds (120) weg erstreckenden ersten strömungsfeldseitigen Randlinienabschnitt (198) umfasst
und/oder
die zweite Randlinie (194) einen sich von dem zweiten mediumkanalseitigen Rand (182) der mediumkanalseitigen Mündungsöffnung (176) im Wesentlichen senkrecht zu der Umfangsrichtung (178) des Strömungsfelds (120) weg erstreckenden zweiten mediumkanalseitigen Randlinienabschnitt (202) und einen sich von dem zweiten strömungsfeldseitigen Rand (188) der strömungsfeldseitigen Mündungsöffnung (184) im Wesentlichen senkrecht zu der Umfangsrichtung (178) des Strömungsfelds (120) weg erstreckenden zweiten strömungsfeldseitigen Randlinienabschnitt (204) umfasst,
**dadurch gekennzeichnet,**
**dass** die strömungsfeldseitige Mündungsöffnung (184) des Verbindungskanals (128) eine größere Fluiddurchtrittsfläche aufweist als die mediumkanalseitige Mündungsöffnung (176) des Verbindungskanals (128).

2. Elektrochemische Vorrichtung nach Anspruch 1, **dadurch gekennzeichnet, dass** die strömungsfeldseitige Mündungsöffnung (184) des Verbindungskanals (128) an einem Eckbereich (190) des Strömungsfelds (120) mündet.

3. Elektrochemische Vorrichtung nach einem der Ansprüche 1 oder 2, **dadurch gekennzeichnet, dass** die erste Randlinie (192) und/oder die zweite Randlinie (194) gestuft ausgebildet ist.

4. Elektrochemische Vorrichtung nach Anspruch 3, **dadurch gekennzeichnet, dass** der durchströmbare Querschnitt des Verbindungskanals (128) sich längs der Durchströmungsrichtung sprunghaft verändert.

5. Elektrochemische Vorrichtung nach einem der Ansprüche 1 bis 4, **dadurch gekennzeichnet, dass** die Bipolarplatte (108) zwei Lagen (130, 132) umfasst, die im Bereich der mediumkanalseitigen Mündungsöffnung (176) und der strömungsfeldseitigen Mündungsöffnung (184) des Verbindungskanals (128) zumindest abschnittsweise voneinander beabstandet sind.

6. Elektrochemische Vorrichtung nach Anspruch 5, **dadurch gekennzeichnet, dass** die Lagen (130, 132) der Bipolarplatte (108) längs einer Kontaktebene (208) aneinander anliegen und dass mindestens eine der Lagen (130, 132) einen an den ersten mediumkanalseitigen Rand (180) der mediumkanalseitigen Mündungsöffnung (176) angrenzenden ersten mediumkanalseitigen Rampenbereich (210),
einen an den ersten strömungsfeldseitigen Rand (186) der strömungsfeldseitigen Mündungsöffnung (184) angrenzenden ersten strömungsfeldseitigen Rampenbereich (212),
einen an den zweiten mediumkanalseitigen Rand (182) der mediumkanalseitigen Mündungsöffnung (176) angrenzenden zweiten mediumkanalseitigen Rampenbereich (214)
und/oder
einen an den zweiten strömungsfeldseitigen Rand (188) der strömungsfeldseitigen Mündungsöffnung (184) angrenzenden zweiten strömungsfeldseitigen Rampenbereich (216) aufweist,
wobei der jeweilige Rampenbereich (210, 212, 214, 216) gegenüber der Kontaktebene (208) geneigt ist.

7. Elektrochemische Vorrichtung nach Anspruch 6, **dadurch gekennzeichnet, dass** eine Lage (130) der Bipolarplatte (108) mindestens einen gegenüber der Kontaktebene (208) geneigten Rampenbereich (210, 212, 214, 216) aufweist, welcher an denselben Rand (180, 186, 182, 188) einer Mündungsöffnung (176, 184) des Verbindungskanals (128) angrenzt wie ein gegenüber der Kontaktebene (208) geneigter Rampenbereich (210, 212, 214, 216) der anderen Lage (132) der Bipolarplatte (108).

8. Elektrochemische Vorrichtung nach einem der Ansprüche 5 bis 7, **dadurch gekennzeichnet, dass** mindestens ein Abstützelement (218) in dem Verbindungskanal (128) zwischen den zwei Lagen (130, 132) der Bipolarplatte (108) angeordnet ist.

## Claims

1. Electrochemical device, comprising
a stack of a plurality of electrochemical units (106) following one another along a stack direction (104), which each comprise an electrochemically active membrane electrode arrangement (110), a bipolar plate (108), and a seal arrangement (142),
at least one medium channel (118), which extends along the stack direction (104) through a plurality of the electrochemical units (106), at least one flow field (120) by means of which a medium from the medium channel (118) is able to flow transversely to the stack direction (104) from the medium channel (118) to another medium channel, and at least one connecting channel (128) by means of which the flow field (120) and the medium channel (118) are in fluidic connection with one another,
wherein the connecting channel (128) has a medium channel-side mouth opening (176), which extends along a peripheral direction (178) of the flow field (120) from a first medium channel-side rim (180) to a second medium channel-side rim (182), and
a flow field-side mouth opening (184), which extends along the peripheral direction (178) of the flow field (120) from a first flow field-side rim (186) to a second flow field-side rim (188),
wherein the first flow field-side rim (186) of the flow field-side mouth opening (184) is offset away from the second flow field-side rim (188) of the flow field-side mouth opening (184) along the peripheral direction (178) of the flow field (120) in relation to the first medium channel-side rim (180) of the medium channel-side mouth opening (176),
and/or
the second flow field-side rim (188) of the flow field-side mouth opening (184) is offset away from the first flow field-side rim (186) of the flow field-side mouth opening (184) along the peripheral direction (178) of the flow field (120) in relation to the second medium channel-side rim (182) of the medium channel-side mouth opening (176),
wherein the first medium channel-side rim (180) of the medium channel side mouth opening (176) is connected to the first flow field-side rim (186) of the flow field-side mouth opening (184) by a first rim line (192), which forms a first lateral delimitation of the connecting channel (128), and the second medium channel-side rim (182) of the medium channel-side mouth opening (176) is connected to the second flow field-side rim (188) of the flow field-side mouth opening (184) by a second rim line (194), which forms a second lateral delimitation of the connecting channel (128), and
wherein the first rim line (192) comprises a first medium channel-side rim line portion (196) extending away from the first medium channel-side rim (180) of the medium channel-side mouth opening (176) substantially perpendicularly to the peripheral direction (178) of the flow field (120) and a first flow field-side rim line portion (198) extending away from the first flow field-side rim (186) of the flow field-side mouth opening (184) substantially perpendicularly to the peripheral direction (178) of the flow field (120),
and/or
the second rim line (194) comprises a second medium channel-side rim line portion (202) extending away from the second medium channel-side rim (182) of the medium channel-side mouth opening (176) substantially perpendicularly to the peripheral direction (178) of the flow field (120) and a second flow field-side rim line portion (204) extending away from the second flow field-side rim (188) of the flow field-side mouth opening (184) substantially perpendicularly to the peripheral direction (178) of the flow field (120),
**characterized in that**
the flow-field side mouth opening (184) of the connecting channel (128) has a greater fluid passage area than the medium channel-side mouth opening (176) of the connecting channel (128).

2. Electrochemical device in accordance with Claim 1, **characterized in that** the flow field-side mouth opening (184) of the connecting channel (128) opens at a corner region (190) of the flow field (120).

3. Electrochemical device in accordance with either of Claims 1 or 2, **characterized in that** the first rim line (192) and/or the second rim line (194) is of stepped configuration.

4. Electrochemical device in accordance with Claim 3, **characterized in that** the cross section of the connecting channel (128) that is able to be flowed through changes suddenly along the through-flow direction.

5. Electrochemical device in accordance with any one of Claims 1 to 4, **characterized in that** the bipolar plate (108) comprises two layers (130, 132) which, in the region of the medium channel-side mouth opening (176) and the flow field-side mouth opening (184) of the connecting channel (128), are spaced at a distance from one another at least in sections.

6. Electrochemical device in accordance with Claim 5, **characterized in that** the layers (130, 132) of the bipolar plate (108) abut against one another along a contact plane (208) and **in that** at least one of the layers (130, 132) has a first medium channel-side ramp region (210) adjoining the first medium channel-side rim (180) of the medium channel-side mouth opening (176),
a first flow field-side ramp region (212) adjoining the first flow field-side rim (186) of the flow field-side mouth opening (184),
a second medium channel-side ramp region (214) adjoining the second medium channel-side rim (182) of the medium channel-side mouth opening (176),
and/or
a second flow field-side ramp region (216) adjoining the second flow field-side rim (188) of the flow field-side mouth opening (184),
wherein the respective ramp region (210, 212, 214, 216) is inclined in relation to the contact plane (208).

7. Electrochemical device in accordance with Claim 6, **characterized in that** a layer (130) of the bipolar plate (108) has at least one ramp region (210, 212, 214, 216) inclined in relation to the contact plane (208), which adjoins the same rim (180, 186, 182, 188) of a mouth opening (176, 184) of the connecting channel (128) as a ramp region (210, 212, 214, 216) of the other layer (132) of the bipolar plate (108) inclined in relation to the contact plane (208).

8. Electrochemical device in accordance with any one of Claims 5 to 7, **characterized in that** at least one supporting element (218) is arranged in the connecting channel (128) between the two layers (130, 132) of the bipolar plate (108).

## Revendications

1. Dispositif électrochimique comprenant un empilement de plusieurs unités électrochimiques (106) se suivant les unes les autres le long d'une direction d'empilement (104), qui comprennent respectivement un ensemble d'électrodes à membrane électrochimiquement actives (110), un plateau bipolaire (108) et un ensemble de joints d'étanchéité (142),
au moins un conduit de milieu (118), qui s'étend le long de la direction d'empilement (104) à travers plusieurs des unités électrochimiques (106),
au moins un champ d'écoulement (120), à travers lequel un milieu peut s'écouler du conduit de milieu (118) de manière transversale à la direction d'empilement (104) du conduit de milieu (118) vers un autre conduit de milieu, et au moins un conduit de liaison (128), par lequel le champ d'écoulement (120) et le conduit de milieu (118) sont en communication fluidique l'un avec l'autre,
dans lequel le conduit de liaison (128) présente un orifice d'embouchure côté conduit de milieu (176), qui s'étend le long d'une direction circonférentielle (178) du champ d'écoulement (120) d'un premier bord côté conduit de milieu (180) à un deuxième bord côté conduit de milieu (182), et un orifice d'embouchure côté champ d'écoulement (184), qui s'étend le long de la direction circonférentielle (178) du champ d'écoulement (120) d'un premier bord côté champ d'écoulement (186) à un deuxième bord côté champ d'écoulement (188),
dans lequel le premier bord côté champ d'écoulement (186) de l'orifice d'embouchure côté champ d'écoulement (184) est décalé par rapport au premier bord côté conduit de milieu (180) de l'orifice d'embouchure côté conduit de milieu (176) le long de la direction circonférentielle (178) du champ d'écoulement (120) de manière à s'éloigner du deuxième bord côté champ d'écoulement (188) de l'orifice d'embouchure côté champ d'écoulement (184)
et/ou
le deuxième bord côté champ d'écoulement (188) de l'orifice d'embouchure côté champ d'écoulement (184) est décalé par rapport au deuxième bord côté conduit de milieu (182) de l'orifice d'embouchure côté conduit de milieu (176) le long de la direction circonférentielle (178) du champ d'écoulement (120) de manière à s'éloigner du premier bord côté champ d'écoulement (186) de l'orifice d'embouchure côté champ d'écoulement (184),
dans lequel le premier bord côté conduit de milieu (180) de l'orifice d'embouchure côté conduit de milieu (176) est relié au premier bord côté champ d'écoulement (186) de l'orifice d'embouchure côté champ d'écoulement (184) par une première ligne de bord (192), qui forme une première délimitation latérale du conduit de liaison (128), et le deuxième bord côté conduit de milieu (182) de l'orifice d'embouchure côté conduit de milieu (176) est relié au deuxième bord côté champ d'écoulement (188) de l'orifice d'embouchure côté champ d'écoulement (184) par une deuxième ligne de bord (194), qui forme une deuxième délimitation latérale du conduit de liaison (128), et
dans lequel la première ligne de bord (192) comprend une première section de ligne de bord côté conduit de milieu (196) s'étendant de manière à s'éloigner du premier bord côté conduit de milieu (180) de l'orifice d'embouchure côté conduit de milieu (176) sensiblement de manière perpendiculaire à la direction circonférentielle (178) du champ d'écoulement (120) et une première section de ligne de bord côté champ d'écoulement (198) s'étendant de manière à s'éloigner du premier bord côté champ d'écoulement (186) de l'orifice d'embouchure côté champ d'écoulement (184) sensiblement de manière perpendiculaire à la direction circonférentielle (178) du champ d'écoulement (120)
et/ou
la deuxième ligne de bord (194) comprend une deuxième section de ligne de bord côté conduit de milieu (202) s'étendant de manière à s'éloigner du deuxième bord côté conduit de milieu (182) de l'orifice d'embouchure côté conduit de milieu (176) sensiblement de manière perpendiculaire à la direction circonférentielle (178) du champ d'écoulement (120) et une deuxième section de ligne de bord côté champ d'écoulement (204) s'étendant de manière à s'éloigner du deuxième bord côté champ d'écoulement (188) de l'orifice d'embouchure côté champ d'écoulement (184) sensiblement de manière perpendiculaire à la direction circonférentielle (178) du champ d'écoulement (120),
**caractérisé en ce**
**que** l'orifice d'embouchure côté champ d'écoulement (184) du conduit de liaison (128) présente une surface de passage de fluide plus grande que l'orifice d'embouchure côté conduit de milieu (176) du conduit de liaison (128).

2. Dispositif électrochimique selon la revendication 1, **caractérisé en ce que** l'orifice d'embouchure côté champ d'écoulement (184) du conduit de liaison (128) débouche sur une zone d'angle (190) du champ d'écoulement (120).

3. Dispositif électrochimique selon l'une quelconque des revendications 1 ou 2, **caractérisé en ce que** la première ligne de bord (192) et/ou la deuxième ligne de bord (194) sont réalisées de manière étagée.

4. Dispositif électrochimique selon la revendication 3, **caractérisé en ce que** la section transversale pouvant être traversée du conduit de liaison (128) se modifie brusquement le long de la direction de l'écoulement traversant.

5. Dispositif électrochimique selon l'une des revendications 1 à 4, **caractérisé en ce que** la plaque bipolaire (108) comprend deux couches (130, 132) qui sont espacées l'une de l'autre au moins par endroits dans la zone de l'orifice d'embouchure côté conduit de milieu (176) et de l'orifice d'embouchure côté champ d'écoulement (184) du conduit de liaison (128).

6. Dispositif électrochimique selon la revendication 5, **caractérisé en ce que** les couches (130, 132) de la plaque bipolaire (108) reposent l'une sur l'autre le long d'un plan de contact (208) et qu'au moins l'une des couches (130, 132) présente une première zone de rampe côté conduit de milieu (210) jouxtant le premier bord côté conduit de milieu (180) de l'orifice d'embouchure côté conduit de milieu (176),
une première zone de rampe côté champ d'écoulement (212) jouxtant le premier bord côté champ d'écoulement (186) de l'orifice d'embouchure côté champ d'écoulement (184),
une deuxième zone de rampe côté conduit de milieu (214) jouxtant le deuxième bord côté conduit de milieu (182) de l'orifice d'embouchure côté conduit de milieu (176)
et/ou
une deuxième zone de rampe côté champ d'écoulement (216) jouxtant le deuxième bord côté champ d'écoulement (188) de l'orifice d'embouchure côté champ d'écoulement (184),
dans lequel la zone de rampe (210, 212, 214, 216) respective est inclinée par rapport au plan de contact (208).

7. Dispositif électrochimique selon la revendication 6, **caractérisé en ce qu'**une couche (130) de la plaque bipolaire (108) présente au moins une zone de rampe (210, 212, 214, 216) inclinée par rapport au plan de contact (208), laquelle jouxte le même bord (180, 186, 182, 188) d'un orifice d'embouchure (176, 184) du conduit de liaison (128) qu'une zone de rampe (210, 212, 214, 216), inclinée par rapport au plan de contact (208), de l'autre couche (132) de la plaque bipolaire (108).

8. Dispositif électrochimique selon l'une quelconque des revendications 5 à 7, **caractérisé en ce qu'**au moins un élément d'appui (218) est disposé dans le conduit de liaison (128) entre les deux couches (130, 132) de la plaque bipolaire (108).
